# EUROPÄISCHE PATENTANMELDUNG

(11) **EP 1 821 012 A2**
(43) Veröffentlichungstag der Anmeldung: **22.08.2007**
(21) Anmeldenummer: 07002783.4
(22) Anmeldetag: 09.02.2007
(51) Int. Cl.: F16K 11/00

(54) **Mehrwegeventil**

(30) Priorität: 15.02.2006 DE 102006006986
(71) Anmelder: Amazonen-Werke H. Dreyer GmbH & Co. KG, 49205 Hasbergen (DE)
(72) Erfinder: Austermann, Stefan, 48346 Ostbevern (DE); Sia, Tim-Randy, 49084 Osnabrück (DE); Langkamp, Laurenz, 49585 Tecklenburg (DE); Ehlen, Volker, 49205 Hasbergen (DE); Kirsten, Eckart, 04205 Leipzig (DE)

(57) **Zusammenfassung**

Mehrwegeventil (9), insbesondere für eine landwirtschaftliche Feldspritze mit einem Gehäuse (11), in welches eine Saugleitung (10) und entsprechend der Anzahl der Wege mehrere Zuleitungen, denen die Einmündung der Zuleitungen verschließende und freigebende Ventilkörper zugeordnet sind, münden, und einem zentralen Betätigungselement (19), mittels welchem die Ventilkörper (20) in eine Schließ - oder Öffnungsstellung versetzbar sind. Um ein einfach aufgebautes und kompakt bauendes Mehrwegventil mit einfacher Bedienungsmöglichkeit zu schaffen, ist vorgesehen, dass die Zuleitungen zumindest annähernd sternförmig in das Gehäuse einmündend angeordnet sind.

## Beschreibung

Die Erfindung betrifft ein Mehrwegeventil gemäß des Oberbegriffes des Patentanspruches 1.

Ein derartiges Mehrwegeventil ist beispielsweise in der EP 13 08 658 A2 beschrieben.

Der Erfindung liegt die Aufgabe zugrunde, ein einfach aufgebautes und kompakt bauendes Mehrwegeventil mit einfacher Bedienungsmöglichkeit und sicher abdichtenden Ventilkörpern zu schaffen.

Diese Aufgabe wird erfindungsgemäß durch das kennzeichnende Merkmal des Patentanspruches 1 gelöst. Infolge dieser Maßnahme sind die den Anschlussleitungen zugeordneten Ventilkörper derart angeordnet, dass sie im Betrieb mit Unterdruck beaufschlagt werden und so gegen den Ventilsitz gesaugt werden. Hierdurch ist eine sichere Abdichtung der Anschlussleitungen während des Betriebes der Feldspritze, wenn der Innenraum des Mehrwegeventils mit Unterdruck durch die Saugleitung beaufschlagt wird, durch die Ventilkörper sichergestellt.

Um die Einmündungen der Anschlussleitungen durch die Ventilkörper sicher abdichten zu können, ist vorgesehen, dass den Einmündungen der Anschlussleitungen auf ihrer dem Innenraum des Mehrwegeventils abgewandten Seite des Gehäuses ein mit dem jeweiligen Ventilkörper zusammenwirkender ventilsitz angeordnet ist.

Um auch eine als Ablassleitung ausgebildete Anschlussleitung sicher abdichten zu können, ist vorgesehen, dass in dem Mehrwegeventil eine als Ablassleitung nutzbare Öffnung angeordnet ist, dass dieser Ablassleitung ebenfalls ein Ventilkörper entsprechend den Anschlussleitungen angeordnet ist. Eine vorteilhafte Ausgestaltung eines Mehrwegeventils, insbesondere beim Einsatz bei einer landwirtschaftlichen Feldspritze lässt sich dadurch erreichen, dass zumindest eine Anschlussleitung als Ablassleitung und die übrigen Anschlussleitungen als Zuleitungen ausgebildet und/oder dient.

Eine vorteilhafte Anordnung der Zuleitungen wird dadurch erreicht, dass die Zuleitungen zumindest annähernd sternförmig in das Gehäuse einmündend angeordnet sind. Hierdurch wird erreicht, dass die Anschlussleitungen optimal in das Gehäuse einmünden, sämtliche Zuleitungen sind so in optimaler Weise zu dem zentralen Betätigungselement angeordnet. Die Anschlussleitungen können somit gleichmäßig verteilt um das Betätigungselement einmündend angeordnet sein. Die den Einmündungen der Anschlussleitungen zugeordneten Ventilkörper sind ebenfalls in optimaler und gleichmäßig verteilter Weise in Bezug auf das Betätigungselement angeordnet. Hierbei sind die Anschlussleitungen in einer bevorzugten Ausführungsform zumindest annähernd auf einer Ebene in das Gehäuse einmündend angeordnet. Eine besonders kompakte Bauweise des Mehrwegeventils wird dadurch erreicht, dass die Saugleitung auf einer zu der Ebene der einmündenden Anschlussleitungen im Winkel liegenden Ebene in das Gehäuse einmündend angeordnet ist. Dadurch, dass die Saugleitung in einer anderen Ebene als die Anschlussleitungen angeordnet ist, ergibt sich ein Mehrwegventil mit einer äußerst kompakten Abmessung.

Eine einfache Betätigung der einzelnen Ventilkörper lässt sich dadurch erreichen, dass Zentralbetätigungselement zumindest einen exzentrisch zur Drehachse des Betätigungselementes angeordneten Betätigungsnocken aufweist.

Um gleichzeitig mit dem Zentralbetätigungselement zwei Ventilkörper betätigen zu können, ist vorgesehen, dass das Betätigungselement zumindest zwei hintereinander und versetzt zueinander angeordnete Betätigungsnocken aufweist.

Um mittels des Betätigungsnockens des Zentralbetätigungselementes die Ventilkörper einerseits mit einer geringen Kraft in Öffnungsstellung bringen zu können, auch wenn während des Betriebes ein Unterdruck auf die Ventilkörper einwirkt, also mit einer geringen Kraft öffnen zu können und andererseits über einen geringen Verstellweg die Ventilkörper in ihre größte Öffnungsstellung mittels des Betätigungsnockens des Zentralbetätigungselementes bringen zu können, ist vorgesehen, dass der Betätigungsnocken in seinem Schaltbereich zur Betätigung des jeweiligen Ventilkörpers zumindest zwei unterschiedliche Steigungsbereiche aufweist und zwar zunächst zum Öffnen der Zugangsleitung eine relativ geringe Steigung und in seinem anschließenden Bereich eine wesentlich größere Steigung. Hierdurch wird erreicht, dass mit einer zunächst geringen Steigung der Exzenterkurve des Betätigungsnockens den mit einem bis zu 0,8 bar Vakuum belasteten und einer Feder vorgespannten Ventilkörper mit einer geringen Kraft von seinem Ventilsitz abheben zu können, damit die Leitungsöffnung der jeweiligen Zuleitung geöffnet werden kann. Nach dem Öffnen fällt das Vakuum ab und die erforderliche Kraft zum weiteren Bewegen des Ventils sinkt, so dass die Kurve des Betätigungsnockens anschließend steiler sein kann, um so mit einem geringeren Verdrehwinkel des Nockens eine schnelle Öffnung des Ventils zu erreichen.

Um verschiedene Schaltkombinationen der Ventilkörper über das Zentralbetätigungselement je nach erforderlichem Einsatz realisieren zu können, ist vorgesehen, dass die Betätigungsnocken in unterschiedlichen Stellungen zueinander angeordnet und/oder anordbar sind. Durch die Veränderung bzw. des Winkels des Betätigungsnockens zueinander ist es möglich, eine beliebige Kombination zweier Abgänge, d.h. die Betätigung zweiter Ventile realisieren zu können.

Um sicherzustellen, dass die Ventilkörper sicher in ihre Schließstellungen gelangen und die Schließkörper in gewünschter Weise in ihrer Schließstellung verharren, ist vorgesehen; dass den Ventilkörpern, jeweils eine Feder derart zugeordnet ist, dass die Feder den Ventilkörper bezogen auf die Öffnung der Zugangsleitung, in seine Schließstellung drückt.

Um die Ventilkörper sicher in dem Ventilgehäuse führen zu können, ist vorgesehen, dass der Ventilkörper einen Ventilteller aufweist, dass beidseitig des Ventiltellers und senkrecht zu diesem Führungsstifte, die gleitend in Führungen des Gehäuses gelagert sind, angeordnet sind. Um verschiedene Kombinationsmöglichkeiten mit nur einem Ventilteller realisieren zu können, der mit dem einen oder anderen Nocken je nach seiner Anordnung im Ventilgehäuse betätigt wird, ist vorgesehen, dass der dem Betätigungselement zugewandte Führungsstift außermittig des Ventiltellers angeordnet ist. Entsprechend dieser Ausgestaltung des Ventiltellers mit der entsprechenden Anordnung des Führungsstiftes ist vorgesehen, dass die Gleitlager für die Aufnahme der Führungsstifte der Ventilteller außermittig der Zulauföffnung der Zuleitung angeordnet sind.

Um eine Verdrehung des Ventilkörpers gegenüber der von ihm zu verschießenden Eingangsöffnung der Zuleitung bei mittig angeordnetem Führungsstift gegenüber dem Ventilkörper zu vermeiden, ist vorgesehen, dass zumindest einer der Führungsstifte und die zugeordneten Gleitlager unrund, vorzugsweise rechteckig oder quadratisch ausgebildet sind.

Eine andere Ausgestaltung der Betätigungsnocken sowie der den Ventiltellern zugeordneten Führungsstiften lässt sich dadurch erreichen, dass Ventilteller mit geschlitztem Führungsstift auf der dem Betätigungsnocken zugewandten Seite und Ventilteller mit einem Führungsstift mit gleich bleibendem Endstück auf der dem Betätigungsnocken zugewandten Seite vorhanden sind, dass ein- mittlerer Nocken und zwei die seitlich des mittleren Nockens angeordnete vorhanden sind, dass der mittlere und die seitlichen Nocken zueinander versetzt angeordnet sind.

Ein derartiges Mehrwegeventil wird in vorteilhafter Weise bei einer landwirtschaftlichen Feldspritze eingesetzt. Mithilfe eines derartigen Mehrwegeventils wird die Einstellung der Feldspritze für die jeweilige Betriebsart erheblich vereinfacht, weil mehrere Ventile üblicher Bauart in das erfindungsgemäße Mehrwegeventil vereinigt sind, somit werden Fehleinstellungen aufgrund der erfindungsgemäßen Ausgestaltung des Ventils ausgeschlossen.

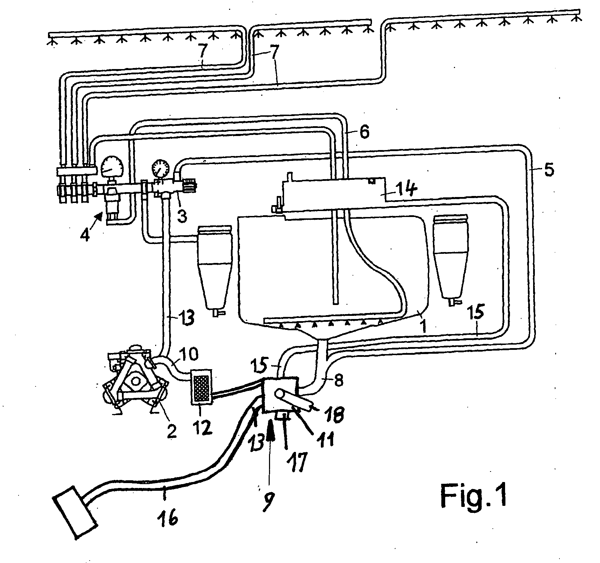

Weitere Einzelheiten der Erfindung sind den übrigen Unteransprüchen, der Beispielsbeschreibung und den Zeichnungen zu entnehmen. Hierbei zeigen
- Fig. 1: den Anschlussplan der verschiedenen Leitungen einer Feldspritze in schematischer Darstellungsweise,
- Fig. 2: das Mehrwegeventil in Seitenansicht,
- Fig. 3: das Dreiwegeventil in Vorderansicht,
- Fig. 4: das Dreiwegeventil im Schnitt IV - IV,
- Fig. 5: das Mehrwegeventil in der Ansicht V - V,
- Fig. 6: das Gehäuse des Mehrwegeventils in Vorderansicht,
- Fig. 7: das Gehäuse des Mehrwegeventils in der Ansicht VII - VII,
- Fig. 8: das Gehäuse des Mehrwegeventils in der Ansicht VIII-VIII,
- Fig. 9: das Mehrwegeventils in der Ansicht IX - IX,
- Fig. 10: den Betätigungsnocken des Mehrwegeventils in perspektivischer Darstellung,
- Fig. 11: die Betätigungsnocken in Seitenansicht,
- Fig. 12: die Betätigungsnocken in der Draufsicht,
- Fig. 13: die Betätigungsnocken in Seitenansicht,
- Fig. 14: die Betätigungsnocken in der Ansicht XIV - XIV,
- Fig. 15: den Ventilkörper in der Ansicht von unten,
- Fig. 16: den Ventilkörper in der Seitenansicht,
- Fig. 17: den Ventilkörper in dem Schnitt XVII - XVII,
- Fig. 18: einen anders ausgestalteten Betätigungsnocken in perspektivischer Darstellung,
- Fig. 19: einen anderes ausgestalteten Ventilteller durch die Betätigung des Nockens gemäß Fig. 18 in der Vorderansicht und
- Fig. 20: einen weiteren Ventilteller für die Betätigung durch die Betätigungsnocken gemäß Fig. 18.

Die landwirtschaftliche Feldspritze weist einen Flüssigkeitstank 1, eine Pumpe 2, ein Druckregelventil 3, eine Dosierarmatur 4, die Rücklaufleitungen 5, die Rührleitung 6, sowie die Spritzleitungen 7 auf. An dem Boden des Flüssigkeitstanks 1 ist die Anschlussleitung 8 angeschlossen. Diese Anschlussleitung 8 mündet in das Mehrwegeventil 9 ein. An das die Saugleitung 10 der Pumpe 2 auf der Rückseite des Gehäuses 11 des Mehrwegeventils 9 einmündend angeschlossen. In der Saugleitung 10 ist der Filter 12 angeordnet. Von der Pumpe 2 führt die Druckleitung 13 zu dem Druckregelventil 3 und der Dosierarmatur 4. Die Pumpe 2 wird in bekannter und daher nicht näher dargestellter Weise von einer Kraftquelle, beispielsweise einer Zapfwelle eines Schleppers oder einer Hydraulikpumpe angetrieben. Neben der als vom Tank 1 kommenden und als Zuleitung 8 ausgebildeten Anschlussleitung münden die vom Frischwasserbehälter 14 kommende und als Anschlussleitung ausgebildete Zuleitung 15, die die Befüllleitung bildende und als Anschlussleitung ausgebildete Zuleitung 16 sowie die als Ablassleitung 17 ausgebildete Anschlussleitung in das Gehäuse 11 des Mehrwegeventils 9 ein. Neben der als vom Tank 1 kommenden und der Zuleitung 8 ausgebildeten Anschlussleitung münden in die vom Frischwasserbehälter 14 kommende und als Anschlussleitung ausgebildete Zuleitung 15, die die Befüllleitung bildende und als Anschlussleitung ausgebildete Zuleitung 16, sowie die als Ablassleitung 17 ausgebildete Anschlussleitung in das Gehäuse 11 des Mehrwegeventils 9 ein. An den Anschluss der Ablassleitung 17 kann auch, falls erforderlich, eine weitere Leitung des Feldspritzensystems, die als Zuleitung ausgebildet ist, angeschlossen sein oder angeschlossen werden.

Das Mehrwegeventil 9 weist ein von einem Handhebel 18 zu betätigendes zentrales Betätigungselement 19 auf, mittels welchem die den Anschlussleitungen 8,13,15,17 zugeordneten und im Folgenden noch näher beschriebenen Ventilkörper 20 zu betätigen sind auf. Über das Betätigungselement 19 können die den jeweiligen Anschlussleitungen 8,13,15,17 zugeordneten Ventilkörper 20 betätigt werden, um über den Innenraum 21 des Gehäuses 11 des Mehrwegeventils 9 einzelnen Anschlussleitungen 8,13,15,17 mit der Saugleitung 10 oder einzelne Anschlussleitungen 8,13,15,17 untereinander miteinander zu verbinden, so dass Flüssigkeit aus der jeweils über der von dem Ventilkörper 20 freigegebenen Anschlussleitung 8,13,15 der Saugleitung 10 oder der Ablassleitung 17 fließen kann. Somit saugt die Pumpe 2 über die Saugleitung 10 und den Filter 12 entweder die Spritzflüssigkeit aus dem Vorratsbehälter 1 über die Leitung 8 oder zum Befüllen des Flüssigkeitstanks 1 Wasser über den als Saugschlauch ausgebildeten Zuleitung 16 oder um den Tank 1 und die Leitungen 7 zu spülen, über die Leitung 15 Wasser aus dem Frischwassertank 14 an.

Im Folgenden soll der Aufbau des Mehrwegeventils 9 erläutert werden:

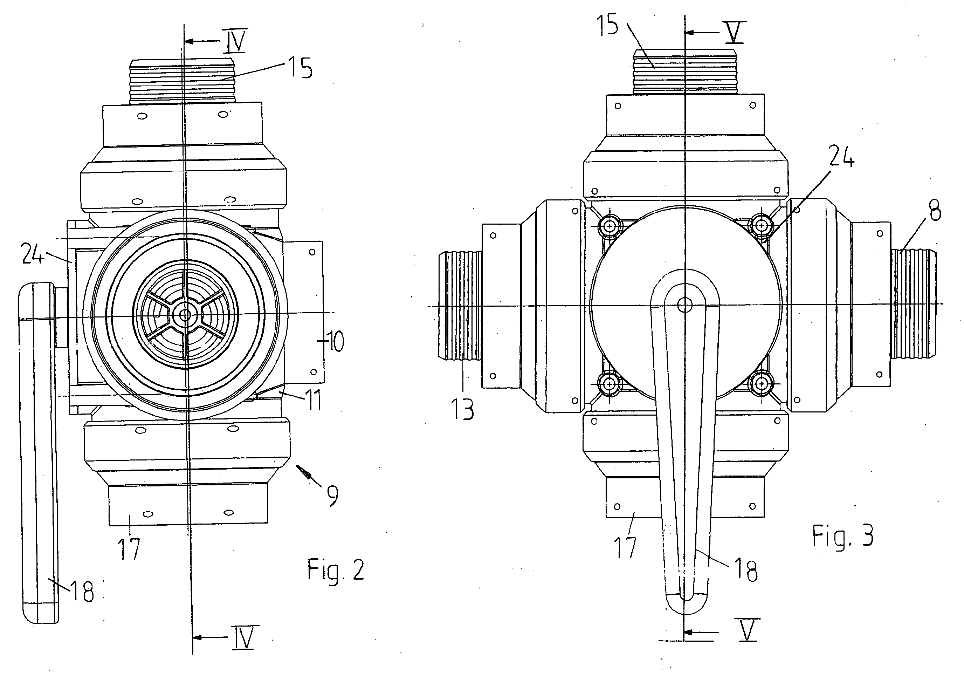

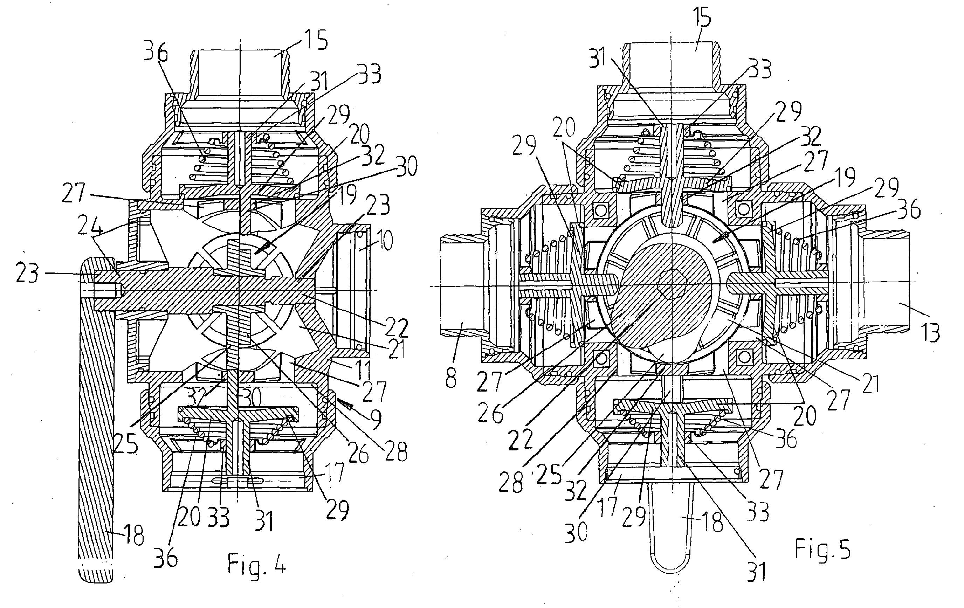

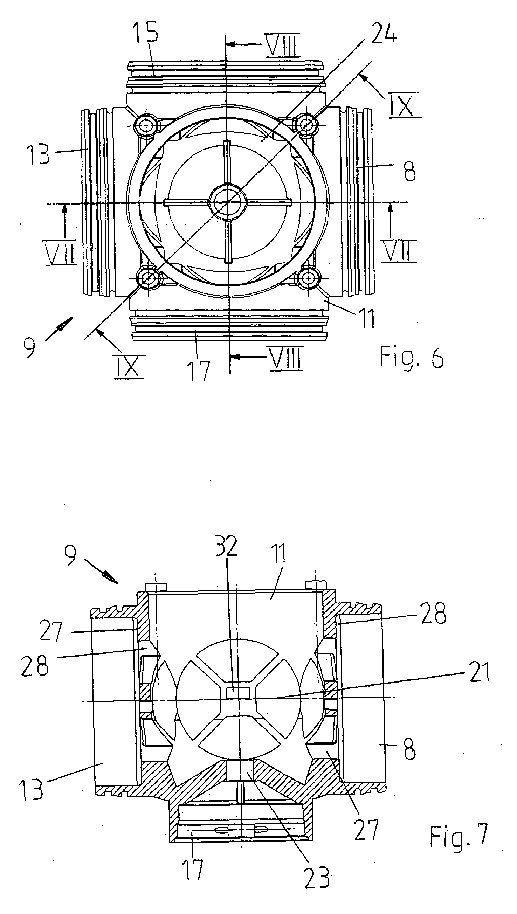

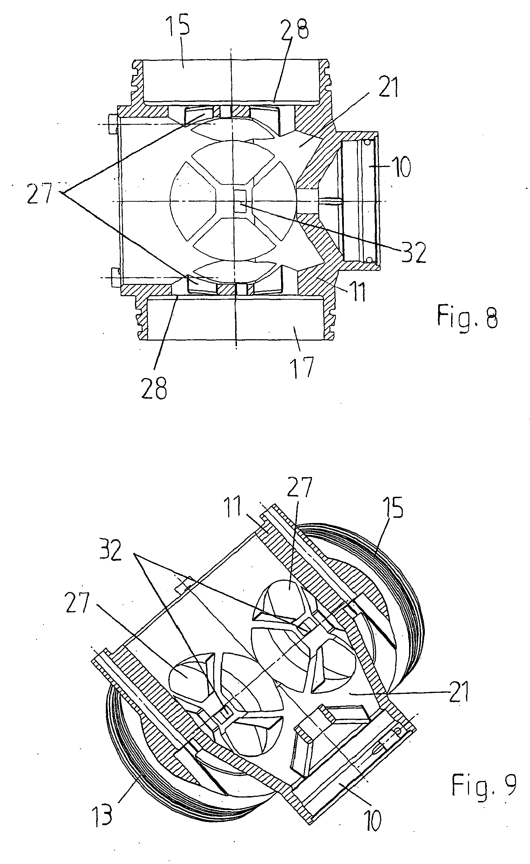

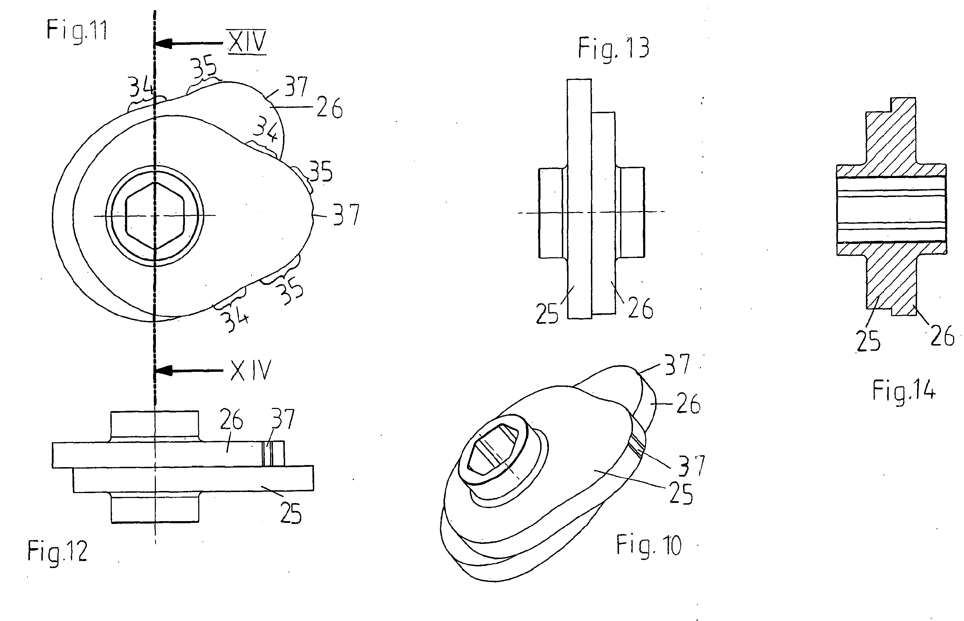

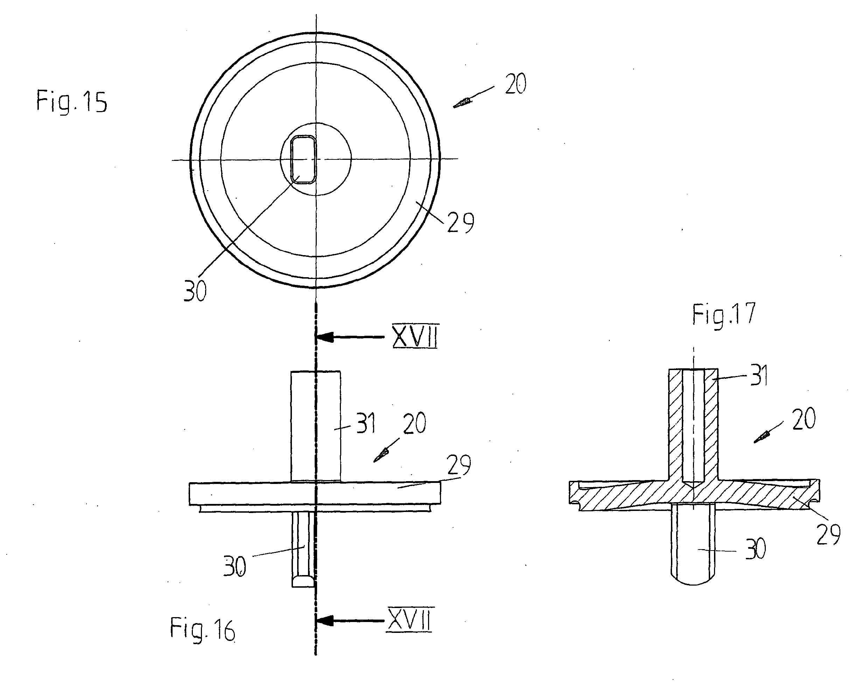

Das Mehrwegeventil entsprechend den Fig. 2 bis 17 weist das Gehäuse 11 auf. In das Gehäuse 11 ist die Schaltwelle 22 des zentralen Betätigungselementes 19 mittels einer zweiseitigen Lagerung 23 drehbar gelagert. Auf der einen Seite ist die Schaltwelle 22 aus dem Gehäuse 11 herausgeführt. An dem herausgeführten Ende 24 ist der Handhebel 18 drehfest angeordnet. Auf der Seite, auf der die Welle 22 aus dem Gehäuse 11 herausgeführt ist, bildet ein abnehmbarer Deckel 24, welcher abdichtet und in eine Gehäuseöffnung des Gehäuses 11 eingesetzt ist, ein Gehäuseteil. Auf der Schaltwelle 22 des zentralen Betätigungselementes 19 sind im Ausführungsbeispiel zwei versetzt zueinander angeordnete Betätigungsnocken 25, 46 zum Betätigen der in das Gehäuse 11 eingesetzten und den Anschlussleitungen 8,13,15,17 zugeordneten Ventilskörpern 20. In den Einmündungsbereichen 27 des Gehäuses 11, in welchen die Anschlussleitungen 8,13,15,17 einmünden sind auf der dem Innenraum 21 des Mehrwegeventils 9 abgewandten Seite des Gehäuses 11 jeweils mit dem jeweiligen Ventilkörper 20 zusammenwirkende Ventilsitze 28 angeordnet. Die den Anschlussleitungen 8,13,15,17 zugeordneten Ventilkörper 20 sind auf der dem Innenraum 21 des Mehrwegeventils 9 abgewandten Seite der Einmündungen 27 angeordnet, wie beispielsweise Fig. 4 und 5 zeigen. Die Ventilkörper 20 weisen einen Ventilteller 29 auf. Weiterhin sind beidseitig des Ventiltellers 29 und senkrecht zu diesem Führungsstifte 30,31 angeordnet. Diese Führungsstifte 30,31 sind in Führungen 32,33 des Gehäuses 9, die im Bereich der Einmündungen 27 der Anschlussleitungen 8,13,15,17 angeordnet sind, gleitend gelagert. Der den Betätigungsnocken 25, 26 des Betätigungselement 19 zugewandte Führungsstift 30 ist außermittig des Ventiltellers 29 angeordnet, wie die Fig. 15 und 16 zeigen. Ebenfalls sind die Gleitlager 32 für die Aufnahme der Führungsstifte 30 der Ventilteller 29 auf der dem Innenraum 21 des Gehäuses 11 des Mehrwegeventils 9 bzw. den Betätigungsnocken 25,26des zentralen Betätigungselementes 19 zugeordnet sind, außermittig der Einmündungen 27 der Zuleitung bzw. der Anschlussleitung 8,13,15,17 angeordnet. Damit die Ventilteller 29 mit ihren Führungsstiften 30,31 sich nicht verdrehen können, ist der dem Betätigungsnocken 25,26 zugewandte Führungsstift 30 und das zugeordnete Gleitlager 32 rechteckig ausgebildet. Die Führungsstifte 30 sind jeweils einem Betätigungsnocken 25,26 zugeordnet, um so entsprechende Kombinationsmöglichkeiten zum gemeinsamen und getrennten Betätigen der den einzelnen Leitungen 8,13,15,17 zugeordneten Ventilkörper 20 realisieren zu können.

Die Zuleitungen 8,13,15 und die Ablassleitungen 17 sind, wie die Fig. 3 und 5 zeigen, sternförmig in das Gehäuse 9 einmündend angeordnet. Die als Zuleitungen 8,13,15 und Ablassleitung 17 ausgebildeten Anschlussleitungen sind auf einer Ebene in das Gehäuse 11 einmündend angeordnet, während die Saugleitung 10 auf einer zu der Ebene der einmündenden Anschlussleitung 8,13,15,17 im Winkel liegenden Ebene in das Gehäuse 11 einmündend angeordnet ist, wie Fig. 2 und 4 zeigen. Somit mündet die Saugleitung 10 außerhalb der Ebene, auf der die Anschlussleitungen 8,13,15,17 in das Gehäuse 11 in das Gehäuse ein. Die Betätigungsnocken 25,26 können in unterschiedlichen Stellungen auf der Schaltwelle zueinander angeordnet werden.

Der jeweilige Betätigungsnocken 25,26 weist in seinem Schaltbereich zur Betätigung des jeweiligen Ventilkörpers 20 zwei unterschiedliche Steigungsbereiche 34,35 auf. Zunächst weist der Betätigungsnocken 25,26 zum Öffnen der Zugangsleitungen 8,13,15,17 zum Betätigen des Ventilskörpers 20 in Steigungsbereich 34 eine relativ geringe Steigung und in seinem anschließenden Bereich 35 eine wesentlich größere Steigung auf. Zunächst wird durch diese Ausbildung der Steigung des Betätigungsnockens in seinem Schaltbereich 34 mit einem größeren Weg nur ein geringerer Betätigungsweg des Ventilkörpers 20 erreicht. Somit kann mittels einer kleinen Kraft über den Führungsstift 30 der Betätigungsnocken 25,26 den Ventilteller 29 des Ventilkörpers 20 von seinen Sitz 28 abheben, so dass Flüssigkeit aus der Zuleitung 8,13,15 in den Innenraum 21 zur Saugleitung 10 strömen kann. Anschließend wird durch den Bereich 35 mit der größeren Steigung erreicht, dass mittels eines kleineren Verdrehwegs des Betätigungsnockens 25,26 der Ventilskörper 20 entsprechend schnell in seine Öffnungsstellung angehoben wird. Es braucht dann nur noch die Kraft der der Ventilkörpern 20 zugeordnete Federn 36 überwunden werden.

Den Ventilkörpern 20 ist auf ihrer dem Innenbereich 21 des Mehrwegeventils 9 abgewandten Seite eine Feder 36 derart zugeordnet, dass die Feder 36 den Ventilkörper 20 bezogen auf die Einmündungen 29 der Anschlussleitungen 8,13,15,17 in seine Schließstellung drückt, so dass der Ventilteller 29 mit dem ihm zugeordneten Dichtring 37, der in der Fig. 16 und 17 nicht dargestellt ist, gegen seinen Ventilsitz 28 gedrückt wird. Die Ventilteller 36 ist derart ausgelegt dass zumindest die Gegenkraft zu einer evtl. auf die Anschlussleitungen 8,13,15 anstehenden Wassersäule im Flüssigkeitssystem aufbringen kann. Während des Betriebs werden die Ventilteller 29 der Ventilkörper 20 von der auf dem Sauganschluss 10 anstehenden Saugleitung gegen den Ventilssitz 28 gezogen.

Die Schaltnocken 25,26 weisen auf ihrer höchsten Erhebung eine Einkerbung 37 auf. In diese Einkerbung 37 fasst der Führungsstift 30 des Ventilkörpers 20 in seiner größten Öffnungsstellung. Hierdurch wird eine sichere Positionierung des Zentralbetätigungselementes 19 mit den Betätigungsnocken 25,26 erreicht.

Durch eine entsprechende Stellung der Betätigungsnocken 25,26 zueinander auf der Schaltwelle 22 können je noch Einsatzfall entsprechend der Schaltstellung der Schaltwelle und der Betätigungsnocken 25,26 nur jeweils ein Ventilteller 29 oder zwei Ventilteller 29 vom Ventilsitz 28 abgehoben sein. Wenn zwei Ventilteller 29 von ihren Ventilsitzen 29 abgehoben sind lassen0 sich zwei Anschlussleitungen 8,13,15,17 miteinander verbinden. So kann beispielsweise die zum Tank 1 führenden Leitungen 8 mit dem Ablassanschluss 17 verbunden werden, so dass Flüssigkeiten aus dem Tank 1 abgelassen werden kann. In einem anderen Fall können die Leitungen 8 und 15 beispielsweise miteinander verbunden werden.

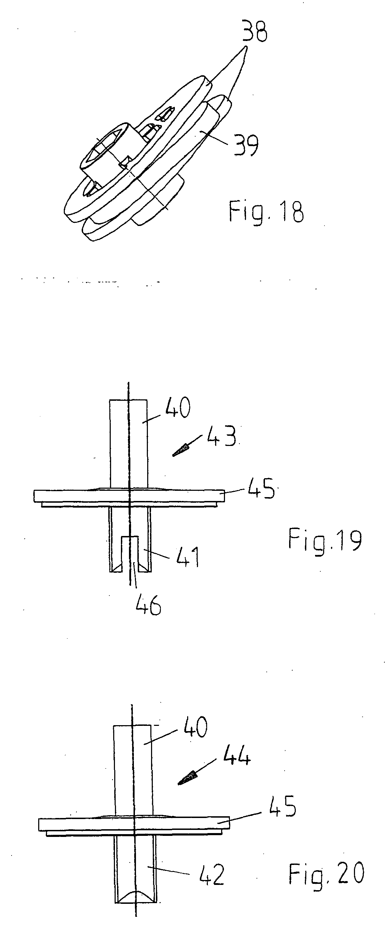

Die Fig. 18 bis 20 zeigen einen anders ausgestalteten Betätigungsnocken 38,39, die auf einer Schaltwelle eines Mehrwegeventil, wie vorbeschrieben, angeordnet sind, und Führungsstifte 40,41,42 der Ventilkörper 43,44. Der eine Ventilkörper 43 weist einen Ventilteller 45 mit einem geschlitzten Führungsstift 41 auf der dem Betätigungsnocken 38,39 zugewandten Seite auf, während der andere Ventilkörper 44 einen Ventilsteller 45 einen ungeschlitzten Führungsstift mit gleich bleibender Dicke auf. Somit kann der mittlere Nocken 39 durch den geschlitzten Bereich 46 des Führungsstiftes 41 sich bewegen ohne den Führungsstift 41 zu berühren und den Ventilteller 45 des Ventilkörpers 43 anzuheben. Die Betätigung des Ventiltellers 45 mit dem geschlitzten Führungsstift 41 erfolgt ausschließlich durch die beiden seitlich des mittleren Betätigungsnockens angeordneten Betätigungsnocken 38. Der ungeschlitzte Führungsstift 42 kann von beiden Betätigungsnocken 38,39 jeweils betätigt werden.

### [Anhängende Zeichnungen]

Anzahl Anhängende Zeichnungen: [20]

## Patentansprüche

1. Mehrwegeventil, insbesondere für eine landwirtschaftliche Feldspritze mit einem Gehäuse, in welches eine Saugleitung und entsprechend der Anzahl der Wege mehrere, insbesondere als Zuleitungen genutzte Anschlussleitungen, denen die Einmündung der Zuleitungen verschließende und freigebende Ventilkörper zugeordnet sind, münden, und einem zentralen Betätigungselement, mittels welchem die Ventilkörper in eine Schließ- oder Öffnungsstellung versetzbar sind, **dadurch gekennzeichnet, dass** die den Anschlussleitungen (8,13,15,17) zugeordneten Ventilkörper (20,43) auf der dem Innenraum (21) des Mehrwegeventils (9) abgewandeten Seite der Einmündungen (27) angeordnet sind.

2. Mehrwegeventil nach Anspruch 1, **dadurch gekennzeichnet, dass** den Einmündungen (27) der Anschlussleitungen (8,13,15,17) auf ihrer dem Innenraum (21) des Mehrwegeventils (9) abgewandten Seite des Gehäuses (11) ein mit dem jeweiligen Ventilkörper (20,43) zusammenwirkender Ventilsitz (28) angeordnet ist.

3. Mehrwegeventil nach einem oder mehreren der vorstehenden Ansprüche, **dadurch gekennzeichnet, dass** in dem Mehrwegventil (9) ein als Ablassleitung (17) nutzbare Öffnung angeordnet ist, dass dieser Ablassleitung (17) ebenfalls ein Ventilkörper (20,43) entsprechend den Anschlussleitungen (8,13,15) angeordnet ist.

4. Mehrwegeventil nach Anspruch 1, **dadurch gekennzeichnet, dass** zumindest eine Anschlussleitung (17) als Ablassleitung (17) und die übrigen Anschlussleitungen (8,13,15) als Zuleitungen (8,13,15) ausgebildet und/oder dient.

5. Mehrwegeventil nach einem oder mehreren der vorstehenden Ansprüche, **dadurch gekennzeichnet, dass** die als Zuleitungen (8,13,15) und Ablassleitung (17) ausgebildeten und mit Ventilkörpern (20,43) versehenen Anschlussleitungen (8,13,15,17) zumindest annähernd sternförmig in das Gehäuse (11) einmündend angeordnet sind.

6. Mehrwegeventil nach einem oder mehreren der vorstehenden Ansprüche, **dadurch gekennzeichnet, dass** die als Zuleitungen (8,13,15) und Ablassleitung (17) ausgebildeten und mit Ventilkörpern versehenen Anschlussleitungen (8,13,15,17) zumindest annähernd auf einer Ebene in das Gehäuse (11) einmündend angeordnet sind.

7. Mehrwegeventil nach einem oder mehreren der vorstehenden Ansprüche, **dadurch gekennzeichnet, dass** die Saugleitung (10) auf einer zu der Ebene der einmündenden Anschlussleitungen (8,13,15,17) im Winkel liegenden Ebene in das Gehäuse (11) einmündend angeordnet ist.

8. Mehrwegeventil nach einem oder mehreren der vorstehenden Ansprüche, **dadurch gekennzeichnet, dass** die Saugleitung (10) außerhalb der Ebene, auf der die Anschlussleitungen (8,13,15,17) in das Gehäuse (11) einmündet, angeordnet ist.

9. Mehrwegeventil nach einem oder mehreren der vorstehenden Ansprüche, **dadurch gekennzeichnet, dass** Zentralbetätigungselement (19) zumindest einen exzentrisch zur Drehachse des Betätigungselementes (19) angeordneten Betätigungsnocken (25,26,38,39) aufweist.

10. Mehrwegeventil nach einem oder mehreren der vorstehenden Ansprüche, **dadurch gekennzeichnet, dass** das Betätigungselement (19) zumindest zwei hintereinander und versetzt zueinander angeordnete Betätigungsnocken (25,26,38,39) aufweist.

11. Mehrwegeventil nach einem oder mehreren der vorstehenden Ansprüche, **dadurch gekennzeichnet, dass** der Betätigungsnocken (25,26,38,39) in seinem Schaltbereich zur Betätigung des jeweiligen Ventilkörpers zumindest zwei unterschiedliche Steigungsbereiche (34,35) aufweist und zwar zunächst zum Öffnen der Zugangsleitung eine relativ geringe Steigung und in seinem anschließenden Bereich eine wesentlich größere Steigung.

12. Mehrwegeventil nach einem oder mehreren der vorstehenden Ansprüche, **dadurch gekennzeichnet, dass** die Betätigungsnocken (25,26,38,39) in unterschiedlichen Stellungen zueinander angeordnet und/oder anordbar sind.

13. Mehrwegeventil nach einem oder mehreren der vorstehenden Ansprüche, **dadurch gekennzeichnet, dass** den Ventilkörpern (20,43), jeweils eine Feder (36) derart zugeordnet ist, dass die Feder (36) den Ventilkörper (20,43) bezogen auf die Öffnung (27) der Zugangsleitung (8,13,15,17), in seine Schließstellung drückt.

14. Mehrwegeventil nach einem oder mehreren der vorstehenden Ansprüche, **dadurch gekennzeichnet, dass** der Ventilkörper (20,43) einen Ventilteller (29,45) aufweist, dass beidseitig des Ventiltellers (29,45) und senkrecht zu diesem Führungsstifte(30,31,40,41,42) die gleitend in Führungen (32,33) des Gehäuses (11) gelagert sind, angeordnet sind.

15. Mehrwegeventil nach Anspruch 14, **dadurch gekennzeichnet, dass** der dem Betätigungselement (25,26) zugewandte Führungsstift (30) außermittig des Ventiltellers (29) angeordnet ist.

16. Mehrwegeventil nach Anspruch 14 und/oder 15, **dadurch gekennzeichnet, dass** die Gleitlager (32) für die Aufnahme der Führungsstifte (30) der Ventilteller (29) außermittig der Zulauföffnung (27)- der Zuleitung (8,13,15,17) angeordnet sind.

17. Mehrwegeventil nach einem oder mehreren der vorstehenden Ansprüche 11 bis 13, **dadurch gekennzeichnet, dass** zumindest einer der Führungsstifte (30) und die zugeordneten Gleitlager (32) unrund, vorzugsweise rechteckig oder quadratisch ausgebildet sind.

18. Mehrwegeventil nach einem oder mehreren der vorstehenden Ansprüche, **dadurch gekennzeichnet, dass** die Führungsstifte (30) jeweils einem der Betätigungsnocken (25,26) zugeordnet sind.

19. Mehrwegeventil nach einem oder mehreren der vorstehenden Ansprüche 1 bis 14, **dadurch gekennzeichnet, dass** die Führungsstifte (41,42) und die Gleitlager zentrisch zu den Zulauföffnungen (27) der Zuleitungen (8,13,15,17) und des Ventiltellers (29,45) angeordnet sind.

20. Mehrwegventil nach Anspruch 19, **dadurch gekennzeichnet, dass** Ventilteller (45) mit geschlitztem Führungsstift (41) auf der dem Betätigungsnocken (38,39) zugewandten Seite und Ventilteller (45) mit einem Führungsstift (42) mit gleich bleibenden Endstück auf der dem Betätigungsnocken (38,39) zugewandten Seite vorhanden sind, dass ein mittlerer Nocken (39) und zwei seitlich (38) des mittleren Nockens (39) angeordnete Nocken vorhanden sind, dass der mittlere und seitlichen Nocken (38,39) zueinander versetzt angeordnet sind.

21. Landwirtschaftliches Feldspritze mit Flüssigkeitstank, Pumpe, einstellbarer Dosiereinrichtung mit Dosierarmatur und Verteilergestänge mit vorzugsweise als Düsen ausgebildeten Ausbringelementen mit einem Mehrwegeventil nach einem oder mehreren der vorstehenden Ansprüche.
